# EUROPÄISCHE PATENTSCHRIFT

(11) **EP 1 108 897 B1**
(45) Veröffentlichungstag und Bekanntmachung des Hinweises auf die Patenterteilung: **25.02.2004**
(21) Anmeldenummer: 00124979.6
(22) Anmeldetag: 16.11.2000
(51) Int. Cl.: F16B 13/12

(54) **Wiederverwendbarer Spreizanker**
Reusable expansion dowel
Cheville d'écartement réutilisable

(30) Priorität: 13.12.1999 DE 19960038
(43) Veröffentlichungstag der Anmeldung: 20.06.2001
(73) Patentinhaber: fischerwerke Artur Fischer GmbH & Co. KG, 72178 Waldachtal (DE)
(72) Erfinder: Frischmann, Albert, 79341 Kenzingen (DE); Prange, Joachim, 79353 Bahlingen (DE)

(56) Entgegenhaltungen:
- US-A- 4 488 843
- US-A- 4 917 552
- US-A- 5 181 816
- US-A- 5 221 167

## Beschreibung

Die Erfindung betrifft einen Spreizanker mit den Merkmalen des Oberbegriffs des Anspruchs 1.

Derartige Spreizanker sind an sich (Z.B. aus der US-A-5 221 167) bekannt, sie werden nach Einbringen in ein Bohrloch durch Eintreiben eines stiftförmigen Spreizelements, beispielsweise Einschlagen eines Spreiznagels, aufgespreizt und dadurch im Bohrloch verankert. Am verankerten Spreizanker lässt sich, üblicherweise an einem Innen- oder Außengewinde ein Gegenstand befestigen. Die bekannten Spreizanker haben den Nachteil, dass sie verloren sind, d. h. sie verbleiben im Bohrloch, auch wenn sie nicht mehr gebraucht werden.

Der Erfindung liegt die Aufgabe zugrunde, einen Spreizanker der vorstehend beschriebenen Art so auszubilden, dass er nach einer Verankerung aus dem Bohrloch entfernt werden kann.

Diese Aufgabe wird erfindungsgemäß durch die Merkmale des Anspruchs 1 gelöst. Der erfindungsgemäße Spreizanker weist eine Auszieheinrichtung auf, mittels derer sich das Spreizelement aus dem Spreizanker soweit ausziehen lässt, dass die Aufspreizung aufgehoben und die Verankerung gelöst ist. Der Spreizanker lässt sich aus dem Bohrloch herausziehen. Der erfindungsgemäße Spreizanker ist insbesondere zur vorübergehenden Befestigung von Gegenständen vorgesehen, beispielsweise zur Befestigung eines sog. Diamantbohrgerätes an einer Betonwand. Nach Beendigung der Bohrung lässt sich der Spreizanker zusammen mit dem Diamantbohrgerät von der Betonwand abnehmen und zur nächsten Bohrung wieder verwenden. Der erfindungsgemäße Spreizanker hat den Vorteil, dass er mehrfach wiederverwendbar ist. Weitere Vorteile sind, dass der Spreizanker durch Eintreiben des stiftförmigen Spreizelements schnell verankerbar und durch Ausziehen des Spreizelements aus dem Spreizanker mittels der Auszieheinrichtung einfach aus dem Bohrloch entfernbar ist.

Als Auszieheinrichtung ist bei einer Ausgestaltung der Erfindung vorgesehen, dass das stiftförmige Spreizelement an einem hinteren, aus dem Spreizanker vorstehenden Ende abgewinkelt ist oder in sonstiger Weise seitlich absteht. Am abgewinkelten Ende kann das Spreizelement (mit einem Werkzeug) ergriffen und aus dem Spreizanker herausgezogen werden. Insbesondere ist vorgesehen, das stiftförmige Spreizelement mit einem Kopf als seitlich abstehender Auszieheinrichtung auszubilden.

Bei einer Ausgestaltung der Erfindung ist ein Schraubelement zur Befestigung eines Gegenstandes am Spreizanker vorgesehen. Das Schraubelement kann beispielsweise eine auf den Spreizanker aufgeschraubte Mutter oder eine in den Spreizanker eingeschraubte Schraube sein Durch Drehen des Schraubelements in einer Löserichtung lässt sich bei dieser Ausgestaltung der Erfindung das stiftförmige, in den Spreizanker eingetriebene Spreizelement aus dem Spreizanker ausziehen und dadurch die Verankerung lösen. Beim Drehen in Löserichtung greift das Schraubelement am Spreizelement an und zieht dieses aus dem Spreizanker heraus.

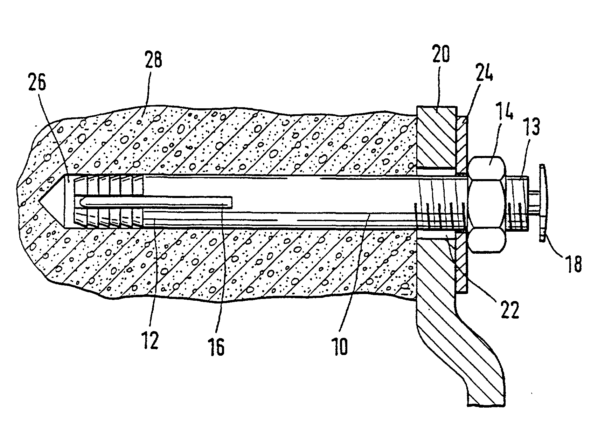

Die Erfindung wird nachfolgend anhand eines in der Zeichnung dargestellten Ausführungsbeispiels näher erläutert. Die einzige Figur zeigt einen Achsschnitt eines erfindungsgemäßen Spreizankers in verankertem Zustand.

Der in der Zeichnung dargestellte, erfindungsgemäße Spreizanker 10 weist einen bolzenförmigen, ebenfalls mit 10 bezeichneten Grundkörper auf. In einem vorderen Abschnitt ist der Spreizanker 10 mit zwei einander kreuzenden, axialen Schlitzen versehen, die den Spreizanker 10 in Spreizschenkel 12 unterteilen. An einem hinteren Ende ist der Spreizanker 10 mit einem Außengewinde 13 versehen, auf das eine Mutter 14 aufgeschraubt ist. Der Spreizanker 10 ist mit einem Axialloch versehen, das vom hinteren Ende bis zu den Spreizschenkeln 12 einen gleichbleibenden Durchmesser aufweist und das sich im Bereich der Spreizschenkel 12 zum vorderen Ende des Spreizankers 10 hin verjüngt. Im Axialloch ist ein Spreizstift 16 aufgenommen, der einen Kopf 18 an seinem hinteren Ende aufweist. Der Kopf 18 des Spreizstiftes 16 steht seitlich über den Spreizanker 10 vor.

Verwendung und Funktion des erfindungsgemäßen Spreizankers 10 werden nachfolgend anhand der Befestigung eines an sich bekannten und hier nicht beschriebenen Diamantbohrgerätes beschrieben, das zum Bohren durchmessergroßer Löcher in Betonwänden eingesetzt wird. Vom Diamantbohrgerät ist in der Zeichnung lediglich ein Konsolenfuß 20 dargestellt, der ein Loch 22 aufweist, durch das der Spreizanker 10 durchgesteckt ist. Zwischen die Mutter 14 und den Konsolenfuß 20 ist eine Unterlegscheibe 24 gelegt.

Der Spreizanker 10 wird ohne den Spreizstift 16 durch das Loch 22 des Konsolenfusses 20 durchgesteckt und in ein Bohrloch 26 in einem Mauerwerk 28 eingeführt. Bei Schwergängigkeit kann der Spreizanker 10 durch Hammerschläge auf sein hinteres Ende in das Bohrloch 26 eingetrieben werden, da der Spreizstift 16 wie bereits gesagt, aus dem Axialloch des Spreizankers 10 entfernt ist. Anschließend wird der Spreizstift 16 in das Axialloch im Spreizanker 10 gesteckt und mit Hammerschlägen zwischen die Spreizschenkel 12 eingetrieben. Der Spreizstift 16 spreizt die Spreizschenkel 12 auseinander und verankert dadurch den Spreizanker 10 im Mauerwerk 28. Zum Abschluss der Befestigung wird die Mutter 14 festgezogen und dadurch das nicht dargestellte Diamantbohrgerät mit seinem Konsolenfuß 20 gegen das Mauerwerk 28 gespannt.

Zum Abnehmen des Diamantbohrgeräts nach Beendigung dessen Gebrauchs wird die Mutter 14 des Spreizankers 10 in Löserichtung gedreht, bis sie am Kopf 18 des Spreizstiftes 16 zur Anlage kommt. Durch Weiterdrehen der Mutter 14 in Löserichtung wird der Spreizstift 16 aus dem Spreizanker 10 herausgezogen, die Aufspreizung der Spreizschenkel 12 wird aufgehoben und dadurch die Verankerung des Spreizankers 10 im Mauerwerk 28 gelöst. Zusammen mit dem Konsolenfuß 20 lässt sich der Spreizanker 10 aus dem Bohrloch 26 herausziehen und ist für eine erneute Befestigung des Diamantbohrgerätes wiederverwendbar. Der Kopf 18 des Spreizstiftes 16 und die auf das Gewinde 12 des Spreizankers 10 aufgeschraubte Mutter 14 bilden eine Auszieheinrichtung 14, 18 zum Ausziehen des Spreizstiftes 16 aus dem Spreizanker 10.

## Patentansprüche

1. Spreizanker, der durch Eintreiben eines stiftförmigen Spreizelements aufspreizbar ist, **dadurch gekennzeichnet, dass** der Spreizanker (10) eine Auszieheinrichtung (14, 18) zum Ausziehen des Spreizelements (16) aus dem Spreizanker (10) aufweist.

2. Spreizanker nach Anspruch 1, **dadurch gekennzeichnet, dass** die Auszieheinrichtung (18) seitlich von dem stiftförmigen Spreizelement (16) absteht.

3. Spreizanker nach Anspruch 2, **dadurch gekennzeichnet, dass** das stiftförmige Spreizelement (16) einen Kopf (18) als Auszieheinrichtung aufweist.

4. Spreizanker nach Anspruch 1, **dadurch gekennzeichnet, dass** der Spreizanker (10) ein Schraubelement (14) zum Befestigen eines Gegenstandes (20) am Spreizanker (10) aufweist, und dass das Schraubelement (14) durch Drehen in einer Löserichtung in Anlage an der Auszieheinrichtung (18) bringbar ist, so dass das stiftförmige Spreizelement (16) mit dem Schraubelement (14) aus dem Spreizanker (10) ausziehbar ist.

5. Spreizanker nach Anspruch 4, **dadurch gekennzeichnet, dass** das Schraubelement eine Mutter (14) ist, die auf ein Gewinde (12) des Spreizankers (10) aufgeschraubt ist.

## Claims

1. Expansible anchor arranged to be expanded by driving in a rod-like expansion element, **characterized in that** the expansible anchor (10) has a withdrawal device (14, 18) for withdrawing the expansion element (16) from the expansible anchor (10).

2. Expansible anchor according to claim 1, **characterized in that** the withdrawal device (18) projects laterally from the rod-like expansion element (16).

3. Expansible anchor according to claim 2, **characterized in that** the rod-like expansion element (16) has a head (18) as the withdrawal device.

4. Expansible anchor according to claim 1, **characterized in that** the expansible anchor (10) has a screw element (14) for fastening an article (20) to the expansible anchor (10); and the screw element (14) is arranged to be brought to bear against the withdrawal device (18) by being turned in a loosening direction so that the rod-like expansion element (16), together with the screw element (14), can be withdrawn from the expansible anchor (10).

5. Expansible anchor according to claim 4, **characterized in that** the screw element is a nut (14), which is screwed onto a thread (12) of the expansion anchor (10).

## Revendications

1. Cheville d'écartement déployable par enfoncement d'un élément d'écartement en forme de tige, **caractérisée par le fait que** ladite cheville d'écartement (10) présente un dispositif d'extraction (14, 18) conçu pour extraire l'élément d'écartement (16) de ladite cheville d'écartement (10).

2. Cheville d'écartement selon la revendication 1, **caractérisée par le fait que** le dispositif d'extraction (18) fait saillie latéralement au-delà de l'élément d'écartement (16) en forme de tige.

3. Cheville d'écartement selon la revendication 2, **caractérisée par le fait que** l'élément d'écartement (16) en forme de tige possède une tête (18) remplissant la fonction d'un dispositif d'extraction.

4. Cheville d'écartement selon la revendication 1, **caractérisée par le fait que** ladite cheville d'écartement (10) comporte un élément vissable (14) destiné à la fixation d'un objet (20) à ladite cheville d'écartement (10) ; et **par le fait que** ledit élément vissable (14) peut être mis en applique contre le dispositif d'extraction (18), par rotation dans une direction de desserrage, de sorte que l'élément d'écartement (16) en forme de tige peut être extrait de la cheville d'écartement (10), avec l'élément vissable (14).

5. Cheville d'écartement selon la revendication 4, **caractérisée par le fait que** l'élément vissable est un écrou (14) vissé sur un filetage (12) de ladite cheville d'écartement (10).
